(19) Europäisches Patentamt
European Patent Office
Office européen des brevets

(11) Veröffentlichungsnummer : **0 022 976**
**B1**

(12) # EUROPÄISCHE PATENTSCHRIFT

(45) Veröffentlichungstag der Patentschrift : **01.10.86**

(51) Int. Cl.⁴ : **C 08 L 83/04**

(21) Anmeldenummer : **80103869.6**

(22) Anmeldetag : **08.07.80**

(54) **Polysiloxanformmassen.**

(30) Priorität : **21.07.79 DE 2929635**

(43) Veröffentlichungstag der Anmeldung : **28.01.81 Patentblatt 81/04**

(45) Bekanntmachung des Hinweises auf die Patenterteilung : **01.10.86 Patentblatt 86/40**

(84) Benannte Vertragsstaaten : **AT BE CH DE FR GB IT LI NL SE**

(56) Entgegenhaltungen :
**DD-A- 102 717**
**DE-A- 1 420 336**
**DE-A- 2 117 026**
**DE-A- 2 413 850**
**ADHÄSION, Band 22, Nr. 9, 1978 Berlin, E. LOUIS "Rohstoffe für Einkomponenten-Siliconfugendichtstoffe und Siliconkleber", Seiten 279 - 287**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Sattlegger, Hans, Dr.**
**Auf dem Heidchen 9**
**D-5068 Odenthal (DE)**
Erfinder : **Schnurrbusch, Karl, Dr.**
**Kurt-Schumacher-Ring 154**
**D-5090 Leverkusen 1 (DE)**
Erfinder : **Degen, Bruno, Dr.**
**Broicher Feld 2**
**D-5060 Bergisch-Gladbach 2 (DE)**
Erfinder : **Achtenberg, Theo, Ing. Grad.**
**Am Heidkamp 2**
**D-5090 Leverkusen 3 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 022 976 B1

**Beschreibung**

Die vorliegende Erfindung betrifft verbesserte Organo-polysiloxan-Formmassen, die insbesondere bezüglich ihrer Haftung auf den verschiedensten Untergründen verbessert sind.

Anwendungsfertige Pasten auf der Basis von Organopolysiloxan haben ein umfangreiches Einsatzgebiet als Fugendichtstoffe gefunden. Derartige Pasten und die daraus durch Vernetzung unter Aufnahme von Luftfeuchtigkeit erhaltenen Elastomerenformkörper stellen eine ideale Dichtungssubstanz für die vielfältigsten Zwecke dar. Beschrieben werden klassische Vertreter derartiger sogenannter Einkomponentensysteme z. B. in FR-PS 1 188 495, DE-PS 1 247 646 oder W. Noll, Chemie und Technologie der Silicone, 1968, Verlag Chemie, Weinheim Kap. 8.1, insbesondere S. 341 und 342.

Ein noch nicht vollständig gelöstes Problem stellt bei den bekannten Einkomponenten-Systemen die Haftung auf den verschiedensten Untergründen dar. Vielfach läßt diese bei einzelnen Systemen zu wünschen übrig bzw. es müssen Substanzen zugesetzt werden, die das System anderweitig wieder negativ beeinflussen, sei es daß sie die Massen verfärben, daß sie physiologisch unbedenklich sind oder daß sich das Vernetzungsverhalten oder die Lagerstabilität nachteilig verändern.

Aufgabe der vorliegenden Erfindung war es daher, in diesen Beziehungen Verbesserungen zu erzielen. Aus der DE-A-21 17 026 war es zwar bekannt, äthoxylierte Verbindungen Systemen, die über Acetoxysilane vernetzen, zuzusetzen. Damit kann bei dem genannten System zwar eine gewisse Verbesserung erzielt werden, doch ist dies nicht ohne weiteres auf andere Systeme übertragen werden. Es hat sich nämlich herausgestellt, daß im Verhalten der einzelnen Systeme (also Massen mit verschiedenen Vernetzersubstanzen) doch erhebliche Unterschiede vorliegen. So konnte mit einem Zusatz von Alkoxysilanen zu Massen mit Amidvernetzern eine erheblich verbesserte Lagerstabilität, Klebfreiheit und Haftung erzielt werden. Bei Massen mit Acetoxysilanen als Vernetzer ist dies bei weitem nicht so ausgeprägt, ja es ergeben sich sogar nachteilige Effekte z. B. nach sehr langen Lagerzeiten.

Überraschenderweise wurde nun gefunden, daß durch Zugabe äußerst wirksamer Substanzen in kleinen Mengen eine sehr gute Haftung erreicht wird, ohne daß sie Lagerstabilität, Vernetz- und Verarbeitbarkeit beeinträchtigen. In vielen Fällen tritt überraschenderweise sogar Verbesserung der Lagerstabilität ein.

Gegenstand der vorliegenden Erfindung sind nun unter Ausschluß von Feuchtigkeit lagerfähige Polysiloxanformmassen, die nach Zutritt von Wasser oder Wasserdampf zu Elastomeren vernetzen, bestehend im wesentlichen aus

A) $\alpha,\omega$-Dihydroxyorganopolysiloxan einer Viskosität von etwa 500 bis 2 000 000 mPas (20 °C)
B) Vernetzungsmitteln,
C) verstärkend wirkenden Füllstoffen,
D) gegebenenfalls einem Härtungskatalysator und
E) 0,1 bis 10 Gew.-% — bezogen auf die Gesamtmenge — einer mindestens 3 Alkoxy-Gruppen aufweisenden Siliciumverbindung, welche dadurch gekennzeichnet sind, daß sie als Vernetzungsmittel Silane mit Alkoxy- und Säureamidgruppen enthalten.

Bei den Verbindungen der Komponente E handelt es sich z. B. um Siliciumverbindungen der folgenden allgemeinen Formel

$$R_nSiB_{4-n}$$

R kann ein Alkylrest mit 1-10 C-Atomen mit 1-4 C-Atomen oder ein Wasserstoffatom sein. Bei B handelt es sich um einen Alkoxyrest mit 1-4 C-Atomen und n sind ganze Zahlen von 0 oder 1.

Die die Haftung überraschend günstig beeinflussende Substanz kann auch in Form relativ komplezierter Substanzen vorliegen, wie z. B.

$$B_3Si\text{-}CH_2\text{-}CH_2\text{-}Si\text{-}O\text{-}Si\text{-}CH_2\text{-}CH_2\text{-}SiB_3$$

Von all diesen Zusätzen ist es an sich bekannt, daß sie allein nicht vernetzend wirken und es wurde daher vermieden, sie in derartigen Systemen einzusetzen.

Die erfindungsgemäßen, kalthärtenden Einkomponentensysteme enthalten folgende Bestandteile :

A. Ein $\alpha,\omega$-Dihydroxypolydiorganosiloxan ; dabei wird die Organogruppe normalerweise eine Methyl- oder Phenylgruppe sein. In kleineren Anteilen kann auch eine Halogenalkyl-, wie z. B. Chlormethyl-, eine Alkenyl-, wie z. B. Vinyl- oder eine Cycloalkyl-, wie z. B. eine Cyclohexylgruppe vorliegen. Die Viskosität dieser Dihydroxypolydiorganosiloxane liegt — je nach den Anforderungen der Endprodukte — zwischen etwa 500 und 2 000 000 mPas (20 °C).

Derartige Homo-, Hetero- oder auch Copolymerisate machen im allgemeinen etwa 10 Gew.-% bis 90 Gew.-% der gesamten Pastenmenge aus.

B. Bei der Vernetzersubstanz handelt sich sich um polyfunktionelle Organosiliciumverbindungen mit mehr als zwei funktionellen Gruppen. Diese Substanz muß in der Lage sein, die unter 1) genannten Substanzen zu « vernetzen ».

Bei Herstellung der erfindungsgemäßen Einkomponenten-Kautschukmassen durch Abmischen der

verschiedenen unter A bis E aufgeführten Substanzen können die unter 2) als Vernetzer dienenden Substanzen entweder während des Mischprozesses oder während des Lagerprozesses oder auch schon in einer Art Vormischung durch Abspaltung einer der reaktiven Gruppen an die Polymerenden gebunden sein.

Solche Organosiliciumverbindungen können sein :

$$R_aSiX_{4-a}.$$

a = 0 bis 2

Hierbei kann R ein Alkyl, Alkenyl, Aryl oder entsprechend halogenierter Rest sein.

Die reaktive Gruppe X ist eine Alkoxy- und/oder Säureamidgruppe, wobei jedoch gewährleistet sein muß, daß jeweils mindestens eine Alkoxy- und eine Säureamidgruppe vorliegt.

C. Verstärkend wirkende Füllstoffe (hochdisperse, durch Flammhydrolyse hergestellte Kieselsäure, Titandioxyd, Ruß usw.), sowie ggf. Füllstoffe wie Quarzmehl, Kreide (natürliche und gefällte), Kunststoffpulver und Pigmente aller Art.

D. Hilfsstoffe verschiedenster Art wie

a) Zusatzstoffe wirksam als Haftvermittler verschiedensten Aufbaus z. B. wie unter 2) beschrieben mit Aminoalkyl, Epoxyalkyl oder anderen reaktiven Alkylgruppen oder auch Verbindungen wie unter 2) beschrieben, bei denen a = 0 ist und verschiedene X sich an einem Siliciumatom befinden.

b) Zusatzstoffe, die z. B. wirksam sind als Trockner und/oder Haftvermittler wie z. B. komplexe Titansäureester (vgl. z. B. DE-PS 1 258 087).

c) Katalysatoren zur Beschleunigung der Reaktion Silanol/Vernetzer oder Vernetzer-Wasser wie Metallseifen der Metalle von Blei bis Mangan in der Spannungsreihe der Metalle oder Aminoverbindungen.

d) Lösungsmittelzusätze wie z. B. Toluol, Petrolether.

e) als Weichmacher bezeichnete Zusätze wie z. B. α,ω-Tri-alkylsiloxypolydiorganosiloxan von 10 bis 1 000 000 cP Viskosität, Polybutene, Benzinkohlenwasserstoffe oder Phosphorsäureester.

f) Zusatzstoffe, die die fungistatische Wirksamkeit der Dichtstoffe verbessern.

g) Zusätze, die die physikalischen Eigenschaften der Dichtstoffe erhöhen, wie z. B. die Heißluftbeständigkeit, Wärmeleitfähigkeit, elektrische Leitfähigkeit oder Chemikalienbeständigkeit.

Die Herstellung der Polysiloxanformmassen wird in üblicher Weise — z. B. wie in den eingangs erwähnten Veröffentlichungen — durchgeführt.

Die vorliegende Erfindung soll anhand der folgenden Beispiele noch näher erläutert werden.

## Beispiel 1

Es wird eine Mischung aus 45 Gew.-Tle. α,ω-Dihydroxypolydimethylsiloxanviskosität bei 20 °C 50 000 cft und 20 Gew.-Tle. α,ω-Bis-(trimethylsiloxy)-polydimethylsiloxanviskosität bei 20 °C 1 400 cft vorgelegt. Dazu werden bei Raumtemperatur 5 Gew.-Tle. Di-N-methylbenzamidethoxysilan und 1 Gew.-Tl. Tetraethoxysilan gegeben und kurz gerührt. Nun werden 20 Gew.-Tle. Kreide, 5 Gew.-Tle. feindisperse Kieselsäure zugegeben und bis zur Homogenität unter Vakuum gerührt. Zum Schluß werden 0,02 Gew.-Tle. eines Katalysators (Dibutylzinndiacetat) direkt oder in einem Lösungsmittel gelöst (z. B. Toluol oder Dioxan) zugegeben und unter Vakuum homogen eingerührt. Nun wird die Masse in Kartuschen oder Tuben abgefüllt und kann ohne Feuchtigkeitszutritt mindestens 1/2 Jahr gelagert werden, ohne daß die Vulkanisationsfähigkeit oder die Haftung bei einer späteren Anwendung beeinträchtigt wird.

Die erfindungsgemäße Maßnahme führt dazu, daß das Produkt ohne Voranstrich auf Kupfer, Aluminium, Stahl, Eisen, PVC und Beton haftete. Ein Dichtstoff, der ohne den Zusatz von Tetraethoxysilan hergestellt wurde, haftete auf diesen Untergründen nicht. Als Beispiel im Bausektor sei PVC angeführt, welches im Fensterbau zum Einsatz kommt.

## Beispiel 2

Es wird eine Mischung aus 45 Gew.-Tle. α,ω-Dihydroxypolydimethylsiloxan und 20 Gew.-Tle. α,ω-Bis-(trimethyl-siloxy)-polydimethylsiloxan gemäß Beispiel 1 vorgelegt. Dazu werden bei Raumtemperatur 5 Gew.-Tle. Di-N-methylbenzamidethoxysilan und 0,5 Gew.-Tle. Tetrapropoxysilan gegeben und kurz gerührt. Nun werden 20 Gew.-Tle. Kreide, 5 Gew.-Tle. feindisperse Kieselsäure zugegeben und bis zur Homogenität unter Vakuum gerührt. Zum Schluß werden 0,02 Gew.-Tle. eines Katalysators (Dibutylzinndiacetat) direkt oder in einem Lösungsmittel gelöst (z. B. Toluol oder Dioxan) zugegeben und unter Vakuum homogen eingerührt. Nun wird die Masse in Kartuschen oder Tuben abgefüllt und kann ohne Feuchtigkeitszutritt mindestens 1/2 Jahr gelagert werden, ohne daß die Vulkanisationsfähigkeit oder die Haftung bei einer späteren Anwendung beeinträchtigt wird.

Die erfindungsgemäße Maßnahme führte dazu, daß dieses Produkt ohne Voranstrich einschließlich siebentägiger Wasserlagerung im Gegensatz zu einer unausgerüsteten Masse, zusätzlich auf Aluminium, Stahl, Eisen und PVC haftete. Auch auf Beton wurde eine wesentliche Haftverbesserung erzielt.

Beispiel 3

Es wird eine Mischung aus 45 Gew.-Tle. α,ω-Dihydroxy-polydimethylsiloxan und 20 Gew.-Tle. α,ω-Bis-(trimethyl-siloxy)-polydimethylsiloxan gemäß Beispiel 1 vorgelegt. Dazu werden bei Raumtemperatur 5 Gew.-Tle. Di-N-methylbenzamidethoxysilan und 1 Gew.-Tl. Polyethoxysiloxan gegeben und kurz gerührt. Nun werden 20 Gew.-Tle. Kreide, 5 Gew.-Tle. feindisperse Kieselsäure zugegeben und bis zur Homogenität unter Vakuum gerührt. Zum Schluß werden 0,02 Gew.-Tle. eines Katalysators (Dibutylzinndiacetat) direkt oder in einem Lösungsmittel gelöst (z. B. Toluol oder Dioxan) zugegeben und unter Vakuum homogen eingerührt. Nun wird die Masse in Kartuschen oder Tuben abgefüllt und kann ohne Feuchtigkeitszutritt mindestens 1/2 Jahr gelagert werden, ohne daß die Vulkanisationsfähigkeit oder die Haftung bei einer späteren Anwendung beeinträchtigt wird.

Mit diesem Zusatz wurde erfindungsgemäß ebenfalls ohne Voranstrich eine gute Haftung, sogar nach 1 Woche Wasserlagerung auf folgenden Untergründen erzielt : Eloxal, Aluminium, Eisen, Kupfer, PVC, Polycarbonat und sogar Beton.

Beispiel 4

Es wird eine Mischung aus 45 Gew.-Tle. α,ω-Dihydroxy-polydimethylsiloxan und 20 Gew.-Tle. α,ω-Bis-(trimethyl-siloxy)-polydimethylsiloxan gemäß Beispiel 1 vorgelegt. Dazu werden bei Raumtemperatur 5 Gew.-Tl. eines Di-N-methylbenzamidäthoxysilans und 1 Gew.-Tl. Ethyltriethoxysilan gegeben und kurz gerührt. Nun werden 20 Gew.-Tle. Kreide, 5 Gew.-Tle. feindisperse Kieselsäure zugegeben und bis zur Homogenität unter Vakuum gerührt. Zum Schluß werden 0,02 Gew.-Tle. eines Katalysators (Dibutylzinndiacetat) direkt oder in einem Lösungsmittel gelöst (z. B. Toluol oder Dioxan) zugegeben und unter Vakuum homogen eingerührt. Nun wird die Masse in Kartuschen oder Tuben abgefüllt und kann ohne Feuchtigkeitszutritt mindestens 1/2 Jahr gelagert werden, ohne daß die Vulkanisationsfähigkeit oder die Haftung bei einer späteren Anwendung beeinträchtigt wird.

Bei diesem Beispiel zeigte sich ebenfalls die große Bedeutung des Zusatzes im Bezug auf die Haftung. Bei Aluminium, Zink, Kupfer und PVC wurde auch hier ohne Voranstrich und unter Belastung durch Wasser ein gutes Haftungsergebnis erreicht.

Beispiel 5

Es wird eine Mischung aus 45 Gew.-Tle. α,ω-Dihydroxy-polydimethylsiloxan und 20 Gew.-Tle. α,ω-Bis-(trimethyl-siloxy)-polydimethylsiloxan gemäß Beispiel 1 vorgelegt. Dazu werden bei Raumtemperatur 5 Gew.-Tle. Di-N-methylbenzamidethoxysilan und 9 Gew.-Tle. eines α,ω-[Bis-Triethoxysilylethyl]-dimethyldisiloxan gegeben und kurz gerührt. Nun werden 20 Gew.-Tle. Kreide sowie 5 Gew.-Tle. feindisperse Kieselsäure zugegeben und bis zur Homogenität unter Vakuum gerührt. Zum Schluß werden gegebenenfalls 0,02 Gew.-Tle. Katalysators (Dibutylzinndiacetat) direkt oder in einem Lösungsmittel gelöst (z. B. Toluol oder Dioxan) zugegeben und unter Vakuum homogen eingerührt. Nun wird die Masse in Kartuschen oder Tuben abgefüllt und kann ohne Feuchtigkeitszutritt mindestens 1/2 Jahr gelagert werden, ohne daß die Vulkanisationsfähigkeit oder die Haftung bei einer späteren Anwendung beeinträchtigt wird.

Die erfindungsgemäße Maßnahme führte dazu, daß das Produkt ohne Voranstrich gegenüber einem Produkt ohne diesen Zusatz eine wesentliche Haftverbesserung auf einer Reihe von Metallen (Aluminium, Kupfer, Stahl), Kunststoffen (verschiedene Arten von PVC) und auf Beton auch noch nach einer Wasserlagerung von einer Woche zeigte.

Beispiel 6

Es wird eine Mischung aus 60 Gew.-Tle. α,ω-Dihydroxy-polydimethylsiloxan und 24 Gew.-Tle. α,ω-Bis-(trimethyl-siloxy)-polydimethylsiloxan gemäß Beispiel 1 vorgelegt. Dazu werden bei Raumtemperatur 5 Gew.-Tle. Methylethoxy-dipropionamidosilan und 1 Gew.-Tl. Polyethoxysiloxan gegeben und kurz gerührt. Nun werden 10 Gew.-Tle. feindisperse Kieselsäure zugegeben und bis zur Homogenität unter Vakuum gerührt. Zum Schluß werden 0,08 Gew.-Tle. Katalysator (Dibutylzinndiacetat) direkt oder in einem Lösungsmittel gelöst (z. B. Toluol oder Dioxan) zugegeben und unter Vakuum homogen eingerührt. Nun wird die Masse in Kartuschen oder Tuben abgefüllt und kann ohne Feuchtigkeitszutritt mindestens 1/2 Jahr gelagert werden, ohne daß die Vulkanisationsfähigkeit oder die Haftung bei einer späteren Anwendung beeinträchtigt wird.

Die erfindungsgemäße Maßnahme führte dazu, daß überhaupt nur mit den angegebenen Zusätzen eine Haftung ohne Voranstrich erzielt werden konnte.

**Patentansprüche**

1. Unter Ausschluß von Feuchtigkeit lagerfähige Polysiloxanformmassen, die nach Zutritt von Wasser oder Wasserdampf zu Elastomeren vernetzen, bestehend im wesentlichen aus

A) α,ω-Dihydroxyorganopolysiloxan einer Viskosität von etwa 500 bis 2 000 000 mPas (20 °C)
B) Vernetzungsmitteln,
C) verstärkend wirkenden Füllstoffen,
D) gegebenenfalls einem Härtungskatalysator und
E) 0,1 bis 10 Gew.-% — bezogen auf die Gesamtmenge — einer mindestens 3 Alkoxy-Gruppen aufweisenden Siliciumverbindung, dadurch gekennzeichnet, daß als Vernetzungsmittel Silane mit Alkoxy- und Säureamidgruppen verwendet werden.

2. Polysiloxanformmassen gemäß Anspruch 1, dadurch gekennzeichnet, daß die Komponente E eine Verbindung der allgemeinen Formel

$$R_nSiB_{4-n} \text{ ist,}$$

wobei
R für eine Alkylgruppe mit 1 bis 10 C-Atomen oder für Wasserstoff,
B für eine Alkoxygruppe mit 1 bis 4 C-Atomen steht und n = 0 oder 1 ist.

**Claims**

1. Polysiloxane moulding compositions which are storable with the exclusion of moisture and which cross-link after the admittance of water or steam to form elastomers, consisting essentially of
A) an α,ω-dihydroxyorganopolysiloxane with a viscosity of about 500 to 2,000,000 mPas (20 °C),
B) cross-linking agents,
C) reinforcing fillers,
D) optionally a hardening catalyst and
E) 0.1 to 10 % by weight — based on the total quantity — of a silicon — compound containing at least 3 alkoxy groups, characterised in that silanes containing alkoxy and acid amide groups are used as the cross-linking agents.

2. Polysiloxane moulding compositions according to Claim 1, characterised in that component E is a compound of the general formula

$$R_nSiB_{4-n}$$

wherein
R represents an alkyl group with 1 to 10 C atoms or hydrogen,
B represents an alkoxy group with 1 to 4 C atoms and n is 0 or 1.

**Revendications**

1. Matières à mouler en polysiloxannes stables à la conservation à l'abri de l'humidité, réticulant à l'état d'élastomères en présence d'eau ou de vapeur d'eau, qui consistent essentiellement en
A) un α,ω-dihydroxyorganopolysiloxanne ayant une viscosité d'environ 500 à 2 000 000 mPa.s à 20 °C,
B) des agents réticulants,
C) des matières de charge à effet renforçant,
D) le cas échéant un catalyseur de durcissement, et
E) de 0,1 à 10 % en poids — par rapport à la quantité totale — d'un composé du silicium contenant au moins trois groupes alcoxy, caractérisées en ce que l'on utilise en tant qu'agents réticulants des silanes contenant des groupes alcoxy et des groupes amide.

2. Matières à mouler en polysiloxannes selon la revendication 1, caractérisées en ce que le composant E) est un composé de formule générale

$$R_nSiB_{4-n}$$

dans laquelle
R représente un groupe alkyle en $C_1$-$C_{10}$ ou l'hydrogène,
B représente un groupe alcoxy en $C_1$-$C_4$ et n est égal à 0 ou 1.